# EUROPEAN PATENT APPLICATION

(11) **EP 0 745 524 A1**
(43) Date of publication of application: **04.12.1996**
(21) Application number: 96500023.5
(22) Date of filing: 16.02.1996
(51) Int. Cl.: B60S 1/48

(54) **Defrosting or deicing device**

(30) Priority: 31.05.1995 ES 9501083
(71) Applicant: Clavijo, Jesus Roberto, 28043 Madrid (ES)
(72) Inventor: Clavijo, Jesus Roberto, 28043 Madrid (ES)
(74) Representative: De Arpe Fernandez, Manuel

(57) **Abstract**

Defrosting or deicing device for automobile vehicle windscreens, by means of heating the water of the windscreenwiper circuit of said vehicles.

In order to heat the water of the windscreen-wiper circuit (5) of a vehicle, in/on a part of the gas collector tube (2) of said vehicle, a tank (1) is provided, coaxially placed therewith, equipped with a water input (3) and a water output (4) connected to said windscreenwiper circuit (5). The tank or chamber (1) may be provided as an external gadget to the gas collector tube (2) or else form integral part thereof.

## Description

Defrosting or deicing device for windscreens on automobile vehicles, by means of heating the water of the windscreenwiper circuit of said vehicles.

The present invention relates to a device for removing the ice or frost from windscreens of automobile vehicles by heating the water contained in the windscreenwiper circuit of the automobile by means of heat generated by the vehicle engine.

The problem represented by the formation of frost or ice on windscreens of automobile vehicles is well known. Known as solution to this problem is an assembly of an electrical resistance, printed or bonded to the windscreen; however, this solution is only applicable to rear windscreens, since the printed or bonded resistance on the inside surface of the glass would impede visibility if installed on the front windscreen. On the other hand, these solutions are economically expensive, and only operate with the energy provided by the battery, with the resultant overcharging thereof.

An object of the invention is the development of a device of the type indicated previously, which permits the elimination of the said disadvantages and with the result, that it is additionally, easy to manufactured and easy to install, even on already existing vehicles.

According to the invention, this task is achieved in that, said device consists of a tank or supply chamber, generally tubular in shape, basically constructed of metallic material with good heat conductivity, which is located on a part of the gas collector tube of the automobile vehicle engine and which has an input and output of water for coupling the windscreen wiper of the vehicle to the water circuit.

According to the invention, this chamber or tank is provided as a gadget which may be attached on a part of the collector tube of the vehicle, by means for example, of flanges or other suitable systems, or else as a device, forming integral part of the actual collector tube of the vehicle.

Other characteristics and advantages of the invention shall be more clearly understood from the following description, carried out with the help of the enclosed drawings, in relation to the non limitative embodiment examples, and in which:
Figure 1 represents a schematic view of a first embodiment of the device for heating the water in the windscreenwiper circuit of a vehicle, according to the invention.
Figure 2 also represents a schematical view of a second embodiment of the device, according to the invention.
Figure 3 represents a schematic view of the coupling of the device of the invention on an automobile vehicle.

The device, according to the invention consists of a chamber or tank 1, basically constructed of a good heat conductivity material, located on a part 2 of the gas collector tube of the vehicle, which has a water input 3 and a water output 4, for connection to the water circuit of the windscreenwiper device 5 of the vehicle.

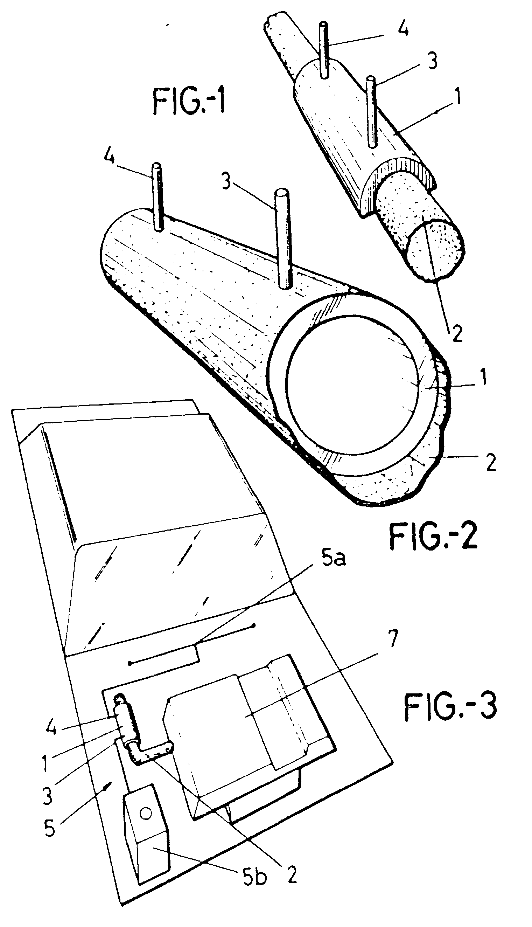

As shown by figure 1, in a first embodiment of the device according to the invention, provision is made for a semi-cylindrical body with adequate inside diameter for its coaxial superimposed coupling on a segment 2 of the gas collector tube of the vehicle. A device supplied in conformance with the above indicated, may easily couple on any vehicle, for example, by means of flanges, clamps or other technically appropriate attachment system.

In accordance with figure 2 representation, in a second preferred embodiment of the invention, the chamber or tank 1 with its output and input of water 3, 4, may be provided as integral part of a collector tube 2 in the form of a coaxial tubular segment.

As is observed in figure 3, the device is placed with its water input 3 and output 4 connected to the water circuit of the windscreenwiper system 4 of the vehicle, more particularly, intercalated between the water tank 5a and the output nozzles 5b, the tank or chamber 1 being on a part of the gas collector tube 2 of the internal fuel engine 6 of the vehicle.

The object of the invention has been sufficiently described, and it is only required to point out that the claims derived from the modifications of shape, materials and similars, as well as the results of the rutine application of what has been previously indicated, shall be considered included within its field, so that the invention shall only be limited by the scope of the appended claims.

## Claims

1. Defrosting or deicing device for vehicle windscreens by means of heating the water of the windscreenwiper circuit of said vehicles, characterized in that it is constituted by a chamber or tank (1), basically constructed of good heat conductivity material placed in/on a part of the gas collector tube (2) of the vehicle, and which is provided with a water input (3) and a water output (4) connected to the windscreenwiper circuit of the vehicle (5).

2. Device according to claim 1, characterized in that the chamber or tank (1) is provided as a semitubular body of appropriate inside diameter for its superimposed and coaxial coupling on a section of the gas collector tube of the vehicle, to which it may be attached by means of flanges, clamps or other suitable elements.

3. Device according to claim 1, characterized in that the chamber or tank (1) is provided as a coaxial tubular body forming integral part of the gas collector tube (2).
